# EUROPÄISCHE PATENTSCHRIFT

(11) **EP 2 560 905 B1**
(45) Veröffentlichungstag und Bekanntmachung des Hinweises auf die Patenterteilung: **03.09.2014**
(21) Anmeldenummer: 11705198.7
(22) Anmeldetag: 21.02.2011
(51) Int. Cl.: B65G 54/02

(54) **TRANSPORTVORRICHTUNG MIT VERBESSERTEN LAUFEIGENSCHAFTEN**
TRANSPORT DEVICE WITH IMPROVED RUNNING CHARACTERISTICS
APPAREIL DE TRANSPORT AVEC DES CARACTERISTIQUES DE FONCTIONNEMENT AMELIOREES

(30) Priorität: 21.04.2010 DE 102010028055
(43) Veröffentlichungstag der Anmeldung: 27.02.2013
(73) Patentinhaber: Robert Bosch GmbH, 70442 Stuttgart (DE)
(72) Erfinder: LOECHT, Heinrich, 76461 Muggensturm (DE)
(86) Internationale Anmeldenummer: PCT/EP2011/052478
(87) Internationale Veröffentlichungsnummer: WO 2011/131386

(56) Entgegenhaltungen:
- EP-A1- 1 123 886
- US-B1- 6 876 896
- US-B2- 6 876 107

## Beschreibung

### Stand der Technik

Die vorliegende Erfindung betrifft eine Transportvorrichtung zur Förderung von Produkten mit umlaufenden Förderelementen, welche verbesserte Laufeigenschaften aufweist.

Transportvorrichtungen sind beispielsweise zur Förderung von Produkten für eine Beschickung von Verpackungsmaschinen in unterschiedlichen Ausgestaltungen, wie z.B. aus der US 6,876,896 B1 und der US 5,225,725 B1 bekannt. Diese bekannten Transportsysteme weisen eine umlaufende Förderstrecke auf, bei der die Förderelemente nach dem Förderprozess zum Produkteinlauf zurückgeführt werden. Eine Laufschiene, auf welcher die Förderelemente laufen, ist dabei aus einer Vielzahl von Einzelteilen zusammengesetzt, wobei sich an einer Lauffläche jeweils Spalte zwischen benachbarten Einzelteilen ergeben. Es wurde nun festgestellt, dass insbesondere die Vielzahl der Spalte für einen übermäßigen Verschleiß an Laufrollen der Förderelemente führt. Weiterhin ergibt sich bei einem Überfahren der Spalten eine hohe Schallemission sowie impulsartige Belastungsstöße auf die Laufrollen.

### Offenbarung der Erfindung

Die erfindungsgemäße Transportvorrichtung zur Produktförderung mit den Merkmalen des Anspruchs 1 weist demgegenüber den Vorteil auf, dass eine Laufschiene vorgesehen ist, welche eine durchgehende, glatte Laufoberfläche frei von Spalten aufweist. Somit wird erfindungsgemäß eine Laufoberfläche ohne Unterbrechungen bereitgestellt, auf der ein verschleißfreies und geräuscharmes Verfahren von Förderelementen möglich ist. Weiterhin können impulsartige Belastungsstöße auf die Transportelemente vermieden werden und somit auch problemlos fragile Güter gefördert werden. Das Förderelement läuft auf einer umlaufend angeordneten Laufschiene um, wobei zum Antrieb des Förderelements eine Linearmotor-Antriebsvorrichtung vorgesehen ist. Die Linearmotor-Antriebsvorrichtung umfasst Primärspulen in der Laufschiene sowie Permanentmagnete an den Förderelementen, die mit den Primärspulen in Wirkverbindung stehen. Weiterhin umfasst die Laufschiene eine Stahlschiene zur Verstärkung einer magnetischen Anzugskraft für das Förderelement. Die Stahlschiene ist dabei parallel zu dem Spulenprimärteil der Linearmotor-Antriebsvorrichtung angeordnet.

Die Unteransprüche zeigen bevorzugte Weiterbildungen der Erfindung.

Vorzugsweise umfasst die Laufschiene eine Unterkonstruktion aus Einzelbauteilen sowie einen auf den Einzelbauteilen angeordneten, umlaufenden Laufbahnbelag, z.B. eine Kunststoffbeschichtung. Die Einzelbauteile sind hierbei vorzugsweise Profilelemente, welche besonders kostengünstig bereitgestellt werden können. Ein weiterer Vorteil der Profilelemente liegt darin, dass beliebige Längen von den Profilelementen abgetrennt werden können und so auf individuelle Kundenwünsche schnell und einfach eingegangen werden kann. Der Laufbahnbelag kann dabei auf die Einzelbauteile aufgebracht sein. Alternativ umfasst die Laufschiene ein umlaufend geschlossenes Bandelement bzw. Bandelementstütze, welche eine Lauffläche für das Förderelement bereitstellt. Das Bandelement ist vorzugsweise in Sandwichbauweise aus mehreren Schichten hergestellt. Besonders bevorzugt ist dabei eine Kombination von Stahlbändern mit Kunststoffbändern. Ein weiterer Vorteil der Verwendung von Bandelementen ist ihre einfache Austauschbarkeit. Das Bandelement ist dabei an einer Nahtstelle derart gearbeitet, dass kein Spalt und keine Unebenheit vorhanden sind. Gegebenenfalls kann das Bandelement auch eine Beschichtung aufweisen.

Weiter bevorzugt umfasst die Transportvorrichtung einen Antrieb, welcher das Bandelement antreibt. Somit kann eine besonders reibungsarme Förderung erreicht werden, da das Bandelement vorzugsweise mit gleichen Geschwindigkeiten wie die Förderelemente auf der Laufschiene angetrieben werden und so keine Relativbewegung zwischen dem Bandelement und den Förderelementen auftritt. Soll beispielsweise ein Abstand zwischen zwei benachbarten Förderelementen geändert werden, kann eines der Förderelemente schneller oder langsamer angetrieben werden, bis der gewünschte Abstand erreicht ist. Der Antrieb ist dabei vorzugsweise ein Elektromotor.

Gemäß einer weiteren bevorzugten Ausgestaltung der Erfindung ist das Förderelement vorzugsweise mit dem angetriebenen Bandelement koppelbar. Dies ist insbesondere für eine Rückfahrstrecke des Förderelements bevorzugt, wobei eine kraft- und/oder formschlüssige Kopplung zwischen Förderelement und Bandelement möglich ist. Hierzu kann beispielsweise eine Magnetkopplung zwischen dem Förderelement und dem Bandelement durch im Bandelement integrierte Permanentmagnete erfolgen. Alternativ kann auch ein Saugband vorgesehen werden, welches das Förderelement an die Bandoberfläche ansaugt. Weiter alternativ kann auch eine Kopplung mit einem Zugmitteltrieb, welcher das Bandelement antreibt, z.B. einer Kette oder einem Riemen, erfolgen.

Weiter bevorzugt umfasst die Laufschiene der Transportvorrichtung eine Mittenführung zur Führung der Förderelemente. Hierzu sind ferner an den Förderelementen Führungsflächen oder Führungsrollen vorzugsweise Permanentmagnete zur Erzeugung einer definierten Vorspannung vorgesehen.

Um eine möglichst exakte Überwachung der Positionen der Förderelemente sicherzustellen, umfasst die Transportvorrichtung ferner vorzugsweise ein umlaufendes Sensorelement, welches parallel zur Laufschiene angeordnet ist. Das Sensorelement kann z.B. mit einem am Förderelement angeordneten Permanentmagneten in Wirkverbindung stehen.

Gemäß einer weiteren bevorzugten Ausgestaltung der Erfindung umfasst das Förderelement wenigstens ein erstes Teilelement und ein zweites Teilelement, welche gelenkig miteinander mittels eines Gelenks verbunden sind und durch weitere Teilelemente beliebig verlängert werden können. Hierdurch wird ein mehrgliedriges Förderelement bereitgestellt, welches insbesondere in den Kurvenbereichen der Laufschiene deutliche Verbesserungen der Fahreigenschaften ermöglicht. Insbesondere sind durch das gelenkige Förderelement kleinere Radien in den Kurvenbereichen möglich, so dass ein kompakterer Aufbau der Transportvorrichtung möglich ist.

Besonders bevorzugt fallen eine Achse einer Laufrolle und eine Gelenkachse des Gelenks zusammen. Dies stellt insbesondere ein sehr gutes und enges Kurvenfahrverhalten der Förderelemente sicher.

### Zeichnung

Nachfolgend werden bevorzugte Ausführungsbeispiele der Erfindung unter Bezugnahme auf die begleitende Zeichnung im Detail beschrieben. In der Zeichnung ist:
- Figur 1: eine schematische, perspektivische Ansicht einer Transportvorrichtung gemäß einem ersten Ausführungsbeispiel der Erfindung,
- Figur 2: eine perspektivische Ansicht eines in Figur 1 verwendeten Förderelements,
- Figur 3: eine schematische Darstellung einer Kurvenfahrt des Förderelements,
- Figur 4: eine schematische, perspektivische Ansicht einer Transportvorrichtung gemäß einem zweiten Ausführungsbeispiel der Erfindung, und
- Figur 5: eine schematische, perspektivische Ansicht einer Transportvorrichtung gemäß einem dritten Ausführungsbeispiel der Erfindung.

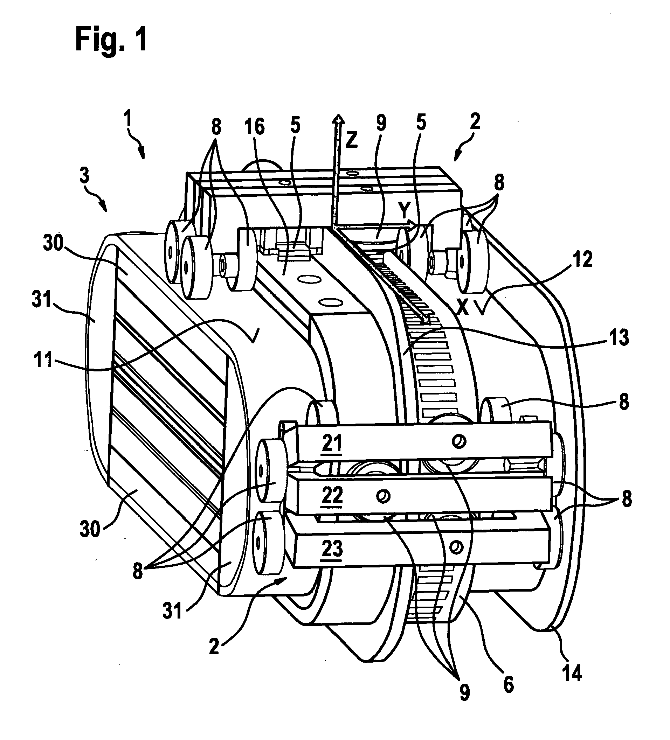

Bevorzugte Ausführungsformen der Erfindung Nachfolgend wird unter Bezugnahme auf die Figuren 1 bis 3 eine Transportvorrichtung 1 gemäß einem ersten Ausführungsbeispiel der Erfindung im Detail beschrieben.

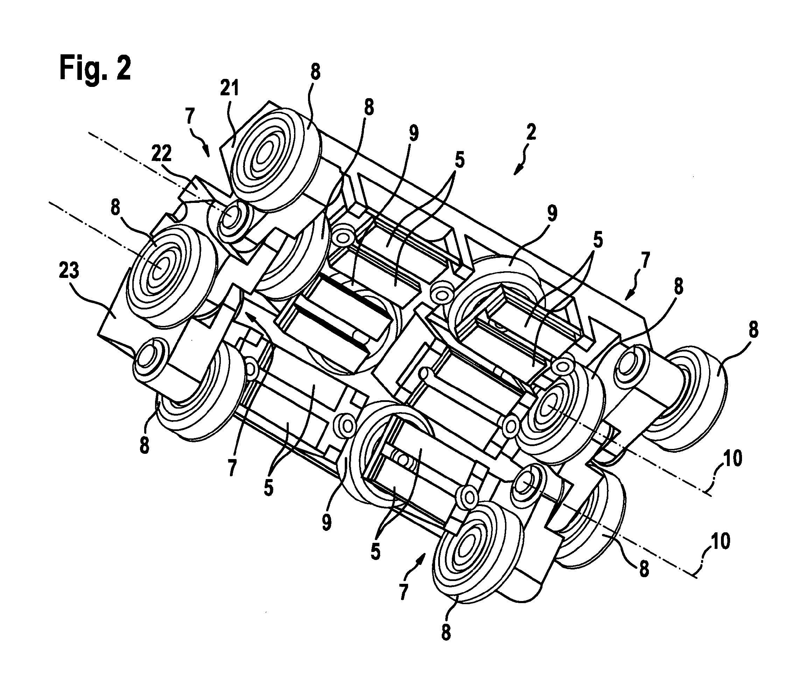

Wie aus Figur 1 ersichtlich ist, umfasst die Transportvorrichtung 1 eine Laufschiene 3, auf welcher mehrere, bewegbare Förderelemente 2 zum Fördern eines Produkts (nicht dargestellt) vorgesehen sind. Die Laufschiene 3 umfasst eine Linearmotor-Antriebsvorrichtung 4 mit einem Spulenprimärteil mit einer Vielzahl von Spulen 6, welche in Wirkverbindung mit Permanentmagneten 5 sind, die an den Förderelementen 2 (vgl. Figur 2) angeordnet sind. Die Laufschiene 3 umfasst ferner eine erste Laufoberfläche (oder Laufbahn) 11 und eine zweite Laufoberfläche 12. Die beiden Laufoberflächen 11, 12 sind frei von Spalten oder Unterbrechungen. Ferner ist eine Führungsschiene 13 vorgesehen, welche ebenfalls umlaufend angeordnet ist und zur Führung der Förderelemente 2 dient. Die Führungsschiene 13 ist zwischen dem Spulenprimärteil der Linearmotor-Antriebsvorrichtung 4 und einer umlaufenden Stahlschiene 16 zur Verstärkung von magnetischen Anzugskräften angeordnet.

Die Förderelemente 2 sind, wie insbesondere aus Figur 2 ersichtlich ist, aus mehreren Teilelementen 21, 22, 23 gebildet, wobei benachbarte Teilelemente jeweils mittels Gelenken 7 miteinander verbunden sind. Hierdurch wird ein mehrgliedriges Förderelement 2 erhalten, wobei an jedem der Teilelemente 21, 22, 23 mindestens eine Laufrolle 8 angeordnet ist. Ferner sind am Förderelement 2 noch Führungsrollen 9 vorgesehen, welche eine Führung des Förderelements 2 an der Führungsschiene 13 ermöglichen. Seitlich der Laufschiene 3 ist ferner ein umlaufendes Sensorelement 14 vorgesehen, um Positionen der Förderelemente 2 an der Laufschiene 3 zu bestimmen.

Durch das Vorsehen der spaltfreien Laufbahnen 11, 12 ergibt sich an den Laufrollen 8 der Förderelemente 2 ein signifikant reduzierter Verschleiß. Ferner sind Geräuschemissionen deutlich reduziert. Darüber hinaus kann eine besonders gute Laufruhe der Förderelemente 2 erreicht werden, da dynamische Zusatzbelastungen auf die Förderelemente 2 an Übergängen der segmentierten Laufschiene durch die Überbrückung mittels der Laufbahnen 11, 12 verhindert ist. Auch treten keine Belastungsstöße auf die Förderelemente 2 auf, so dass auch fragile Produkte sicher und schnell gefördert werden können.

In diesem Ausführungsbeispiel sind als Laufbahn 11, 12 Bandelemente in Sandwichbauweise, umfassend ein Stahlband und ein Kunststoffband, vorgesehen. Die Laufbänder 11, 12 sind dabei austauschbar angeordnet, so dass nach einer gewissen Laufzeit und gegebenenfalls einer auftretenden Abnutzung an den Oberflächen ein schneller und einfacher Austausch möglich ist.

In diesem Ausführungsbeispiel sind zwei Laufbahnen 11, 12, jeweils an einer Seite der Laufschiene 3 vorgesehen. Hierdurch kann das Förderelement 2 sicher auf den Laufbahnen ohne Gefahr von Verkippungen verfahren werden. Es sei jedoch angemerkt, dass es auch möglich ist, lediglich eine einzige Laufbahn für die Förderelemente vorzusehen.

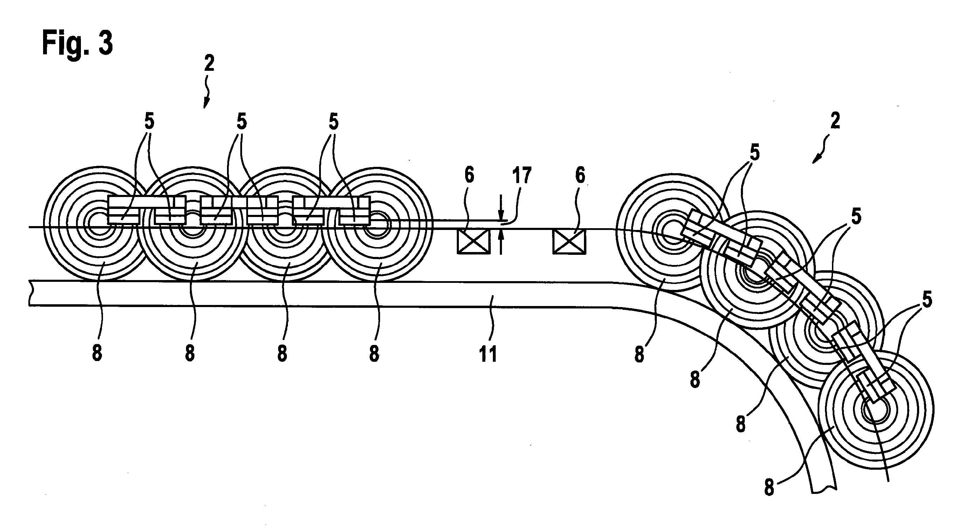

Figur 3 zeigt schematisch eine Kurvenfahrt eines gelenkigen Förderelements 2 auf der Laufschiene 3. Für ein Förderelement 2, welches sich auf einem geraden Teil der Laufschiene befindet, ist ein Luftspalt 17 eingezeichnet, der zwischen den Permanentmagneten 5 an dem Förderelement 2 sowie den Spulen 6 des Spulenprimärteils in der Laufschiene vorhanden ist. Dieser Luftspalt 17, d.h., Abstand zwischen den Permanentmagneten und den Spulen, wird im Kurvenbereich, wie aus Figur 3 ersichtlich ist, kleiner, wobei aufgrund der ebenen Oberfläche der Permanentmagnete 5 sich kein vollständig konstanter Luftspalt mehr im Kurvenbereich ergibt. Im Vergleich zum Stand der Technik sind jedoch die Unterschiede der Abstände zwischen den Permanentmagneten und den Spulen aufgrund der Gelenkigkeit der Förderelemente 2 deutlich reduziert. Hierdurch wird eine signifikante Verringerung von Vorschubkraftverlusten zum Antreiben der Förderelemente 2 ermöglicht. Auch werden die Führungsrollen 9 in den Kurvenbereichen automatisch tangential zur Bewegungsrichtung ausgerichtet, so dass Rutschbewegungen der Führungsrollen und somit Reibungsverluste vermieden werden können.

Bezüglich des Förderelements 2 sei angemerkt, dass die Förderelemente eine beliebige Anzahl von Teilelementen aufweisen können, wodurch ein modularer Aufbau der Förderelemente möglich ist. Dadurch kann, falls notwendig, eine schnelle Umrüstung der Förderelemente erfolgen bzw. der modulare Aufbau ermöglicht ein Gleichteilekonzept für die Förderelemente bei unterschiedlichen Kundenwünschen.

Die geraden Bereiche der Laufschiene 3 sind aus geraden Profilelementen 30 und die Kurven aus bogenförmigen Profilelementen 31 hergestellt. Dies ermöglicht ebenfalls einen modularen Aufbau der Laufschiene, wobei Profilelemente unterschiedlicher Länge und/oder Breite und/oder mit verschiedenen Radien vorgesehen werden können. Die Laufbahnen auf den bogenförmigen Profilelementen können sowohl konvex als auch konkav ausgebildet sein, so dass die Förderelemente mit "bananenförmigen" Führungssystemen mit Links- und Rechtskurven eingesetzt werden können. Nach dem Zusammenbau der Profilelemente wird dann ein Bandelement 11 über die Profilelemente gezogen, so dass eine ebene und keine Fugen aufweisende Lauffläche für die Laufrollen 8 der Förderelemente 2 bereitgestellt wird. Die Laufbänder sind dann jeweils individuell an die jeweilige Länge der Laufschienen angepasst.

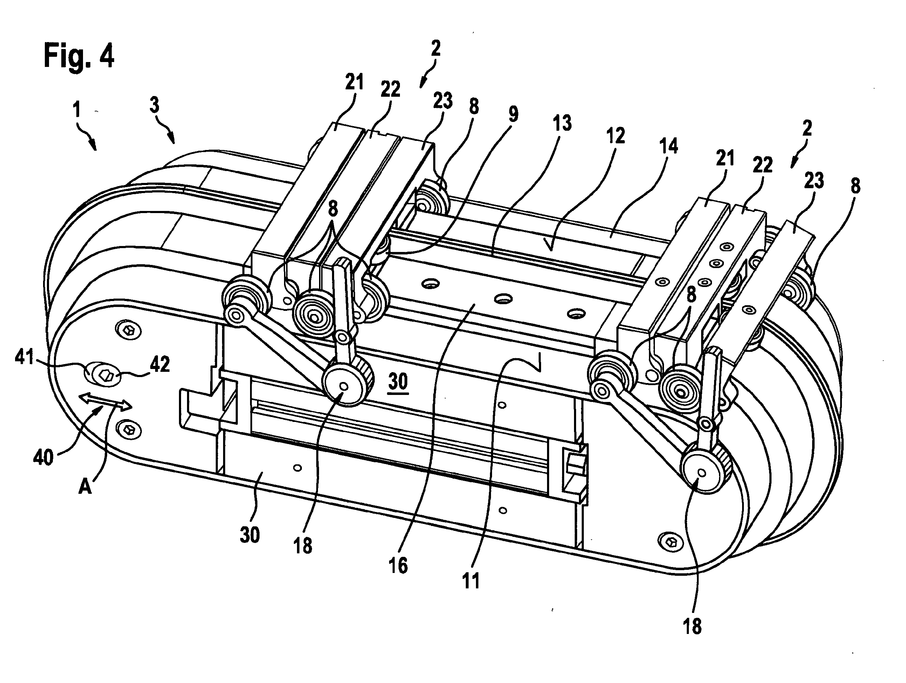

Nachfolgend wird unter Bezugnahme auf Figur 4 eine Transportvorrichtung 1 gemäß einem zweiten Ausführungsbeispiel der Erfindung im Detail beschrieben, wobei gleiche bzw. funktional gleiche Teile mit den gleichen Bezugszeichen wie im ersten Ausführungsbeispiel bezeichnet sind.

Im Unterschied zum ersten Ausführungsbeispiel umfasst die Transportvorrichtung 1 gemäß dem zweiten Ausführungsbeispiel zusätzlich noch eine Spanneinrichtung 40, umfassend ein Langloch 41 und einen darin angeordneten Exenterbolzen 42. Die Spanneinrichtung 40 dient zum Spannen der ersten und zweiten Laufbahn 11, 12. Durch Lösen der Spanneinrichtung 40 kann ein schneller und einfacher Wechsel der Laufbänder 11, 12 erreicht werden. Das Verstellelement ist in Figur 4 durch den Doppelpfeil A angedeutet. Ferner umfasst das zweite Ausführungsbeispiel Transportfinger 18, wobei jeweils einer an einem Förderelement 2 angeordnet ist. Die Transportfinger 18 stehen dabei senkrecht von den Förderelementen 2 hervor und dienen zum Bewegen eines zu fördernden Produkts, welches auf einer nicht gezeigten Förderstrecke über der Transportvorrichtung 1 zu fördern ist. Der Transportfinger 18 ist dabei seitlich an den Förderelementen 2 angeordnet. Ansonsten entspricht dieses Ausführungsbeispiel dem ersten Ausführungsbeispiel, so dass auf die dort gegebene Beschreibung verwiesen werden kann.

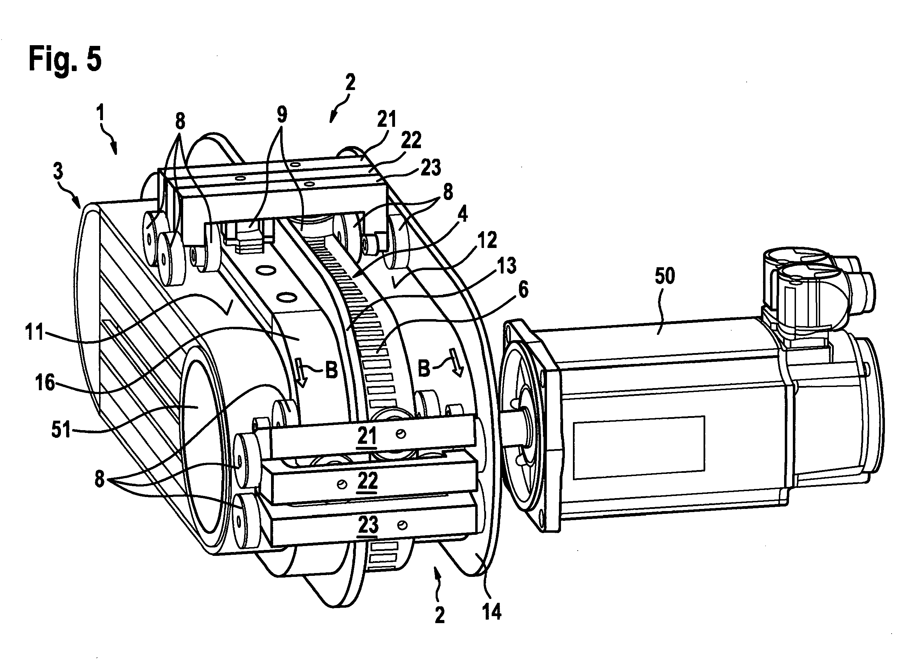

Figur 5 zeigt eine Transportvorrichtung 1 gemäß einem dritten Ausführungsbeispiel der Erfindung, wobei gleiche bzw. funktional gleiche Teile mit den gleichen Bezugszeichen wie in den beiden vorhergehenden Ausführungsbeispielen bezeichnet sind.

Im Unterschied zu den beiden vorhergehenden Ausführungsbeispielen weist die Transportvorrichtung 1 des dritten Ausführungsbeispiels neben der Linearmotor-Antriebsvorrichtung 4 einen zweiten Antrieb 50 in Form eines Elektromotors auf. Der zweite Antrieb 50 dient dabei zum Antreiben einer Riemenscheibe 51, mit welcher die beiden Laufbänder 11, 12 in Kontakt stehen. Dadurch werden die Laufbänder 11, 12 im Unterschied zu den vorhergehenden Ausführungsbeispielen, wie durch die Pfeile B angedeutet, angetrieben. Eine Antriebsgeschwindigkeit ist dabei vorzugsweise derart gewählt, dass eine Geschwindigkeit der Laufbänder 11, 12 und eine Geschwindigkeit der Förderelemente 2 gleich ist. Lediglich wenn z.B. ein Abstand zwischen den Abstand zwischen den Förderelementen 2 verändert werden soll, wird eine Relativgeschwindigkeit zwischen den Laufbändern 11, 12 und den Förderelementen 2 verändert. Erst bei einer derartigen Geschwindigkeitsänderung beginnen sich die Laufrollen 8 zu drehen. Somit kann durch die angetriebenen Laufbahnen 11, 12 ein Verschleiß der Laufrollen 8 minimiert werden. Ferner ergeben sich keinerlei Rollgeräusche der Laufrollen 8 auf den Laufbändern.

Weiterhin erfolgt eine Kopplung zwischen den Förderelementen 2 und den angetriebenen Laufbändern 11, 12 während einer Rückführung der Förderelemente 12 im unteren Bereich der Laufschiene 3. Die Kopplung kann beispielsweise durch eine signifikante Erhöhung der Reibungskräfte zwischen den Förderelementen 2 und den Laufbändern 11, 12, z.B. durch ein Vakuum, erreicht werden. Es sei angemerkt, dass in diesem Ausführungsbeispiel aufgrund der nur minimalen Relativbewegung zwischen dem Förderelement 2 und den Laufbändern 11, 12 die Laufrollen 8 auch durch kostengünstige Gleitelemente ersetzt werden können.

Zur Reduzierung der Gleitreibung zwischen den angetriebenen Laufbändern 11, 12 und anderen Gestellteilen, insbesondere in den geraden Bereichen bzw. den in der Rolle 51 gegenüberliegenden Kurvenbereichen, können nachfolgende Maßnahmen vorgesehen werden. Zum einen kann ein mikroporöses Material an der Oberfläche verwendet werden, so dass eine Luftlagerung zwischen den angetriebenen Laufbändern 11, 12 und den anderen Bauteilen erfolgt. Alternativ können auch zusätzliche Bänder mit umlaufenden Kugel- bzw. Zylinderketten an der Innenseite der Laufbänder 11, 12 angeordnet werden. Die Förderelemente können dann auch mit den Ketten gekoppelt werden. Weiterhin kann die Nutzung von magnetischen Abstoßungskräften zwischen den umlaufenden Laufbändern und den Gestellteilen die Reibung reduzieren. Ansonsten entspricht dieses Ausführungsbeispiel den vorhergehenden Ausführungsbeispielen, so dass auf die dort gegebene Beschreibung verwiesen werden kann.

## Patentansprüche

1. Transportvorrichtung zur Förderung eines Produkts, umfassend:
- ein bewegbares Förderelement (2) zum Fördern des Produkts,
- eine ortsfeste, umlaufend angeordnete Laufschiene (3), welche einen Laufpfad für das Förderelement (2) definiert, und
- eine Linearmotor-Antriebsvorrichtung (4) zum Antrieb des Förderelements (2), umfassend Primärspulen (6) in der Laufschiene (3) und Permanentmagnete (5),
- wobei das Förderelement (2) wenigstens einen Permanentmagneten (5) aufweist, der mit den Primärspulen der Linearmotor-Antriebsvorrichtung (4) in Wirkverbindung steht,
**dadurch gekennzeichnet, dass**
- die Laufschiene (3) eine durchgehende Laufbahn (11, 12) frei von Spalten aufweist, auf welchen die Förderelemente (2) umlaufen, und
- die Laufschiene (3) eine Stahlschiene (16) zur Verstärkung einer magnetischen Anzugskraft für das Förderelement (2) umfasst, wobei die Stahlschiene (16) parallel zu der Vielzahl von Primärspulen (6) der Linearmotor-Antriebsvorrichtung (4) angeordnet ist.

2. Transportvorrichtung nach Anspruch 1, **dadurch gekennzeichnet, dass** die Laufschiene (3) eine Unterkonstruktion aus Einzelbauteilen (30, 31), vorzugsweise geraden und/oder gebogenen Profilelementen, und einen Laufbahnbelag (11, 12) aufweist.

3. Transportvorrichtung nach Anspruch 1, **dadurch gekennzeichnet, dass** die Laufschiene (3) ein gestellfestes umlaufend geschlossenes Bandelement (11, 12) oder ein endlos langes Bandelement umfasst, welche Laufflächen für das Förderelement (2) bereitstellen.

4. Transportvorrichtung nach Anspruch 3, ferner umfassend einen zweiten Antrieb (50), welcher das Bandelement (11, 12) antreibt.

5. Transportvorrichtung nach Anspruch 4, **dadurch gekennzeichnet, dass** das Förderelement (2) mit dem Bandelement (11, 12), insbesondere an einer Rückführstrecke des Laufpfades, koppelbar ist.

6. Transportvorrichtung nach Anspruch 5, **dadurch gekennzeichnet, dass** eine Kopplung zwischen dem Förderelement (2) und dem Bandelement (11, 12) magnetisch und/oder mechanisch und/oder mittels Unterdruck erfolgt.

7. Transportvorrichtung nach einem der vorhergehenden Ansprüche, **dadurch gekennzeichnet, dass** die Laufschiene (3) eine Mittenführung (13) zur Führung der Förderelemente (2) umfasst.

8. Transportvorrichtung nach einem der vorhergehenden Ansprüche, **gekennzeichnet durch** ein umlaufendes Sensorelement (14) zur Positionsbestimmung der Förderelemente (2).

9. Transportvorrichtung nach einem der vorhergehenden Ansprüche, **dadurch gekennzeichnet, dass** das Förderelement (2) wenigstens ein erstes Teilelement (1) und ein zweites Teilelement (22) aufweist, welche gelenkig mittels eines Gelenks (7) miteinander verbunden sind.

10. Transportvorrichtung nach einem der vorhergehenden Ansprüche, **dadurch gekennzeichnet, dass** das Förderelement (2) Laufrollen (8) umfasst und wenigstens eine Achse einer Laufrolle mit einer Gelenkachse (10) eines Gelenks (7) zur Verbindung der Teilelemente zusammenfällt.

## Claims

1. Transport device for conveying a product, comprising:
- a movable conveying element (2) for conveying the product,
- a stationary, circumferentially arranged running rail (3), which defines a running path for the conveying element (2), and
- a linear motor drive device (4) for driving the conveying element (2), comprising primary coils (6) in the running rail (3) and permanent magnets (5),
- the conveying element (2) having at least one permanent magnet (5), which is operatively connected to the primary coils of the linear motor drive device (4),
**characterized in that**
- the running rail (3) has a continuous running track (11, 12) free of gaps, on which the conveying elements (2) circulate, and
- the running rail (3) comprises a steel rail (16) to reinforce a magnetic attraction force for the conveying element (2), the steel rail (16) being arranged parallel to the multiplicity of primary coils (6) of the linear motor drive device (4).

2. Transport device according to Claim 1, **characterized in that** the running rail (3) has a substructure comprising individual components (30, 31), preferably straight and/or curved profiled elements, and a running track covering (11, 12).

3. Transport device according to Claim 1, **characterized in that** the running rail (3) has a circumferentially closed band element (11, 12) fixed to the frame, or an endlessly long band element, which provide running surfaces for the conveying element (2).

4. Transport device according to Claim 3, further comprising a second drive (50), which drives the band element (11, 12).

5. Transport device according to Claim 4, **characterized in that** the conveying element (2) can be coupled to the band element (11, 12), in particular in a return section of the running path.

6. Transport device according to Claim 5, **characterized in that** a coupling between the conveying element (2) and the band element (11, 12) is made magnetically and/or mechanically and/or by means of vacuum.

7. Transport device according to one of the preceding claims, **characterized in that** the running rail (3) comprises a central guide (13) for guiding the conveying elements (2).

8. Transport device according to one of the preceding claims, **characterized by** a circumferential sensor element (14) for determining the position of the conveying elements (2).

9. Transport device according to one of the preceding claims, **characterized in that** the conveying element (2) has at least one first part element (1) and a second part element (22), which are connected to each other in an articulated manner by means of a joint (7).

10. Transport device according to one of the preceding claims, **characterized in that** the conveying element (2) comprises running rollers (8), and at least one axis of a running roller coincides with a joint axis (10) of a joint (7) for connecting the part elements.

## Revendications

1. Dispositif de transport pour le transport d'un produit, comprenant :
- un élément de transport mobile (2) pour le transport du produit,
- un rail de roulement fixe (3), disposé de manière circonférentielle, qui définit un chemin de roulement pour l'élément de transport (2), et
- un dispositif d'entraînement à moteur linéaire (4) pour l'entraînement de l'élément de transport (2), comprenant des bobines primaires (6) dans le rail de roulement (3) et des aimants permanents (5),
- l'élément de transport (2) présentant au moins un aimant permanent (5) qui est en liaison fonctionnelle avec les bobines primaires du dispositif d'entraînement à moteur linéaire (4),
**caractérisé en ce que**
- le rail de roulement (3) présente une piste de roulement continue (11, 12) exempte de fentes, sur lesquelles les éléments de transport (2) circulent, et
- le rail de roulement (3) comprend un rail d'acier (16) pour renforcer une force d'attraction magnétique pour l'élément de transport (2), le rail d'acier (16) étant disposé parallèlement à la pluralité de bobines primaires (6) du dispositif d'entraînement à moteur linéaire (4).

2. Dispositif de transport selon la revendication 1, **caractérisé en ce que** le rail de roulement (3) présente une sous-construction constituée de composants individuels (30, 31), de préférence des éléments profilés droits et/ou cintrés, et une garniture de bande de roulement (11, 12).

3. Dispositif de transport selon la revendication 1, **caractérisé en ce que** le rail de roulement (3) comprend un élément de bande (11, 12) fixé au bâti, fermé sur la circonférence, ou un élément de bande long sans fin, qui fournissent des surfaces de roulement pour l'élément de transport (2).

4. Dispositif de transport selon la revendication 3, comprenant en outre un deuxième entraînement (50) qui entraîne l'élément de bande (11, 12).

5. Dispositif de transport selon la revendication 4, **caractérisé en ce que** l'élément de transport (2) peut être accouplé à l'élément de bande (11, 12), en particulier au niveau d'une section de retour du chemin de roulement.

6. Dispositif de transport selon la revendication 5, **caractérisé en ce qu'**un accouplement entre l'élément de transport (2) et l'élément de bande (11, 12) se produit de manière magnétique et/ou mécanique et/ou au moyen d'une dépression.

7. Dispositif de transport selon l'une quelconque des revendications précédentes, **caractérisé en ce que** le rail de roulement (3) comprend un guide central (13) pour le guidage des éléments de transport (2) .

8. Dispositif de transport selon l'une quelconque des revendications précédentes, **caractérisé par** un élément de capteur circonférentiel (14) pour déterminer la position des éléments de transport (2) .

9. Dispositif de transport selon l'une quelconque des revendications précédentes, **caractérisé en ce que** l'élément de transport (2) présente au moins un premier élément partiel (1) et un deuxième élément partiel (22), qui sont connectés de manière articulée l'un à l'autre au moyen d'une articulation (7).

10. Dispositif de transport selon l'une quelconque des revendications précédentes, **caractérisé en ce que** l'élément de transport (2) comprend des rouleaux de roulement (8) et au moins un axe d'un rouleau de roulement coïncide avec un axe d'articulation (10) d'une articulation (7) pour la connexion des éléments partiels.
